# EUROPEAN PATENT SPECIFICATION

(11) **EP 1 864 860 B1**
(45) Date of publication and mention of the grant of the patent: **30.10.2013**
(21) Application number: 07107513.9
(22) Date of filing: 04.05.2007
(51) Int. Cl.: B60R 1/06

(54) **Improvements relating to mountings for vehicle side mirrors**
Verbesserungen im Zusammenhang mit Halterungen für Außenspiegel von Fahrzeugen
Améliorations associées au montage de rétroviseurs extérieurs pour véhicules

(30) Priority: 08.06.2006 GB 0611271
(43) Date of publication of application: 12.12.2007
(73) Proprietor: Nissan Motor Manufacturing (UK) Ltd., Cranfield Bedfordshire MK43 0DB (GB)
(72) Inventor: Brown, James Nissan Motor Manufacturing (UK) Ltd, Moulsoe Road Cranfield Bedfordshire MK43 0DB (GB)
(74) Representative: Hufton, Victoria Alice

(56) References cited:
- WO-A-97/48573
- WO-A-2005/120899
- DE-U1- 9 201 007
- US-A- 6 039 449
- US-A1- 2005 083 596
- US-B1- 6 382 805

## Description

This invention relates to mountings for vehicle side mirrors, and a method of locating such mirrors on a structure such as the outer panel of a vehicle door.

Vehicle side mirrors, simply referred to as side mirrors hereafter, are conventionally supported by mountings which are secured to the front doors of a motor vehicle using fixing screws.

Typically, a number of fixing screws are inserted, from the inside of a vehicle, outwardly, through holes in a door panel of a vehicle, into associated threaded posts in a base of a mounting. The mounting is then secured to the panel by tightening the fixing screws. In many applications, a gasket seals the space between the base of the mounting and the vehicle panel to prevent water ingress and to reduce wind noise. In such cases the gasket is provided with gaps or perforations to allow access of the fixing screws to the posts in the base.

Side mirror mountings are usually secured to vehicles on assembly lines, where little labour time is available. A problem associated with conventional side mirror mountings, particularly in assembly line environments, is that they are misaligned before being secured by fixing screws. This is damaging to perceived quality, especially as the mirror lies close to door shut lines and other styling features which tend to emphasise any misalignment.

One reason why side mirrors may be misaligned during mounting is an accumulation of tolerances in the various mounting formations such as the holes through which the fixing screws extend.

To ensure that a side mirror is correctly mounted to a vehicle, care is required to ensure that the mounting does not move with respect to the door panel before tightening the fixing screws. This can, for example, be achieved by partially tightening all fixing screws initially, then checking the position of the mounting and, finally, tightening the screws completely once it has been determined that the mounting is in the correct position. Unfortunately, such measures are time and effort intensive and hence unsuitable for mass production on an assembly line. Assembly line workers are generally inside vehicles when fitting side mirror mountings in order to tighten the fixing screws inserted from the inside. They do not have the time or inclination to move outside the vehicle in order to check the alignment of the side mirror mounting, and then to move back inside to tighten the fixing screws.

It has been suggested that the problem of misaligned side mirror mountings could be mitigated by the provision of a specially-shaped gasket which not only seals the space between the base of a mounting and a door panel but also helps to locate the base with respect to the panel. Such a gasket is affixed to the base and comprises an integral projection which is inserted into an aperture in the door panel to locate the mounting while the base is permanently secured by screws.

Unfortunately the use of a specially-shaped gasket has does not always satisfactorily avoid misalignment of side mirror mountings. For example, there may be applications where it is desirable to fit mountings without gaskets. Even when a gasket is required, the provision of a gasket with an integral projection does not necessarily enable assembly workers properly to align a mounting without leaving their position inside a vehicle. WO 2005/120899 discloses a mirror assembly with a feature to temporarily support the weight of the mirror on the vehicle during assembly but does not attempt to accurately locate the mirror relative to the vehicle. In other words it does not facilitate simple, one-handed location of a mounting that can be performed, for example, whilst reaching from the inside to the outside of a vehicle, without looking.

In a broad sense, and from a first aspect, the present invention resides in a mounting for a vehicle side mirror, wherein the mounting is adapted to be secured to a panel of a vehicle and comprises a plurality of projections for insertion into associated apertures in the panel to locate the mounting before it is secured to the panel.

The provision of a plurality of projections makes it possible for assembly workers accurately to locate the mounting prior to securing it to a panel of a vehicle. The mounting may be adapted to be secured to a panel in any appropriate manner, for example, by comprising one or more fixing means such as threaded posts or threaded studs, or by comprising a surface which can be glued to the panel.

Preferably, the mounting may comprise a base for supporting a side mirror, the base comprising the plurality of projections. This ensures that the projections are located on the same component that supports the side mirror (which may itself be housed in a separate frame or sail). The closer the mirror is supported to the projections, the more accurately it will be located.

The mounting of the present invention may optionally comprise a gasket. In this context the optional presence of a base comprising the plurality of projections allows, for example, for embodiments of the invention in which the mounting does not comprise a gasket. It also allows for embodiments of the invention that comprise a gasket not including locating features (such as projections).

Advantageously, in order to enable the mounting of the present invention to be located particularly easily, a first one of the projections may be adapted to be inserted into a first associated aperture to provide a first location point for the mounting and provisionally to support the mounting in an anchored, but still movable e.g. pivotable position; and a second one of the projections may be adapted to be inserted into a second associated aperture to provide a second location point for the mounting, the first and second location points combining to locate the mounting.

This configuration enables assembly workers to locate the mounting in a multi-step process, initially inserting the first projection and then pivoting the anchored mounting as necessary before inserting the second projection to complete location of the mounting. Thus location of the mounting becomes a relatively simple task which can, for instance be performed by an assembly worker whilst reaching from the inside to the outside of a vehicle, without looking.

There are numerous ways in which the first projection may be adapted to provide a first location point for the mounting and provisionally to support the mounting in an anchored, but movable position. All configurations that fulfil the requisite function in the context of the invention are suitable. However, according to a preferred embodiment of the invention, the first projection may comprise a lateral protrusion adapted to engage with an edge of the first aperture to anchor the mounting. This represents a convenient and effective option.

To provide additional flexibility during location of the mounting, and despite being adapted to support the mounting in an anchored position, the first projection may further be adapted to be deliberately removable from the first aperture to allow, in use, deliberate disengagement of the anchored mounting from the panel. Where this is the case, it is particularly advantageous for any lateral protrusion that may optionally be comprised on the first projection to extend in the direction of the second projection and to be adapted to prevent the first projection from being removed from the first aperture when the second projection is inserted in the second aperture.

The first projection may advantageously comprise a hook shape to provide a hooked anchorage when inserted into the first aperture. Alternatively, the first projection may be adapted to provide a snap-fitting anchorage when inserted into the first aperture.

To improve the functionality of the first and second projections, the second projection may preferably have a free end and be tapered towards the free end to facilitate an interference fit with the second aperture. The mounting can then be located in a final, accurate and stable position simply by pressing the second projection into the second aperture after the first projection has been inserted and anchored in the first aperture. An interference fit of the second projection ensures that the second projection is located accurately, without a tolerance. This may have the additional effect of eliminating any misalignment that could be caused by a tolerance in the diameter of the first projection, which may for example result from adaptation of the first projection to support the mounting in an anchored, but movable position.

Where the second projection is tapered to facilitate an interference fit, the second projection may ideally comprise a circular cross section for maximum accuracy of location in the second aperture.

As stated above, the mounting may comprise fixing means for securing the mounting to the panel. Such fixing means may be threaded, for example taking the form of one or more threaded posts or threaded studs. Optionally, the fixing means may be distinct from the projections.

From a second aspect, the present invention resides in a method of locating, on a vehicle, a side mirror mounting comprising an anchoring projection and a secondary locating projection, the method comprising: inserting the anchoring projection into a first aperture in the structure to support the mounting in an anchored, but movable position; moving the anchored mounting; and inserting the secondary locating projection into a second aperture in the structure, the inserted anchoring and secondary locating projections combining to locate the mounting with respect to the structure.

Preferably, inserting the anchoring projection may provide a first, approximate location of the mounting on the structure and inserting the secondary location projection may provide a second, more accurate location of the mounting. For example there may be a tolerance between the anchoring projection and the first aperture, and the step of inserting the secondary locating projection may prevent movement of the first projection within the first aperture. This advantageously enables a loose fit around the anchoring projection, which in turn enables easier insertion of the anchoring projection into the first aperture and movement of the mounting to aim the secondary location projection into the second aperture, whilst still providing for accurate final location of the mounting.

In order that this invention may be more readily understood, reference will now be made, by way of example, to the accompanying drawings in which:
Figure 1 is an exploded view of a vehicle side mirror mounting according to the invention and a portion of a door of a vehicle to which the side mirror mounting is secured; and
Figure 2a and 2b are schematic front sectional views of the components of Figure 1 as the mounting is being located on the vehicle door.

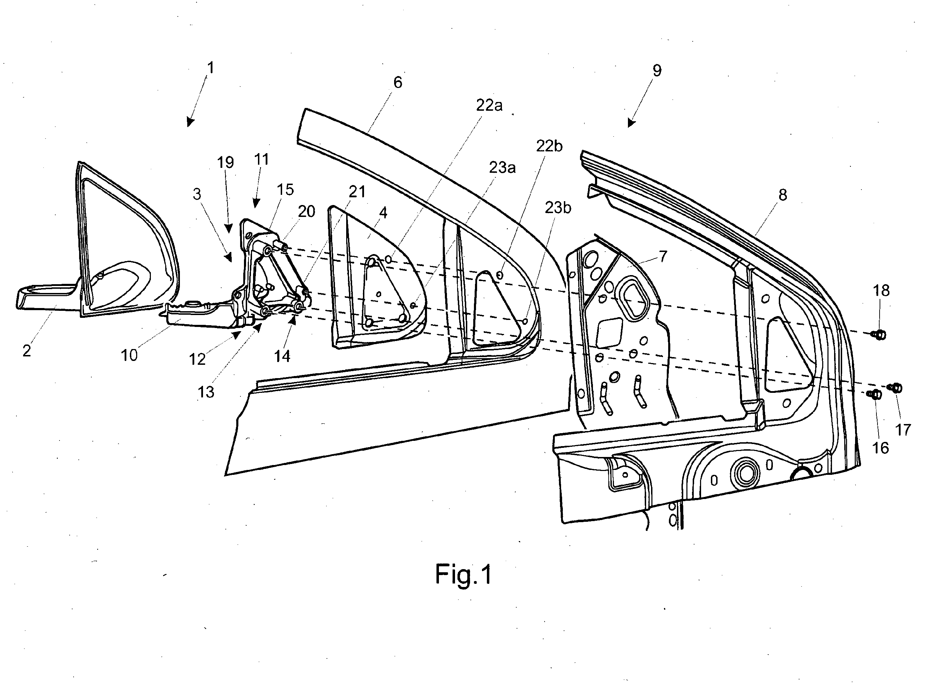

Referring firstly to Figure 1, in one embodiment of the invention, a vehicle side mirror mounting 1 comprises a mirror sail 2, a mirror base 3 and a gasket 4. Also shown in Figure 1 are an outer panel 6, a reinforcing portion 7 and an inner panel 8, all belonging to a vehicle door 9 to which the mounting 1 is to be secured.

The mirror sail 2 supports a side mirror in conventional fashion, enabling usual side mirror functions such as angular mirror adjustment, and is attached to the mirror base 3. The side mirror and structural details supporting the mirror functions have been omitted from the drawings to enhance clarity.

The mirror base 3 acts both as a support for the mirror sail 2 and as a means for attaching the mounting 1 to the vehicle door 9. It takes the form of an L shaped bracket, comprising a lower portion 10, and an upright portion 11 that is generally orthogonal to the lower portion 10. The lower portion 10 acts as the main support for the mirror sail 2 and is brought into a substantially horizontal position, extending outwardly when the mounting 1 is secured to the vehicle door 9, in use. The upright portion 11, in use, lies adjacent to the outer panel 6 of the vehicle door 9. The upright portion 11 and the lower portion 10 meet at a junction 12.

The upright portion 11 of the mirror base 3 comprises first, second and third internally-threaded posts 13, 14, 15 whose openings face away from the lower portion 10, i.e. inwardly toward the door 9 in use. These openings, in use, receive associated fixing screws 16, 17, 18. The first and second threaded posts 13, 14 are located a few centimetres apart, adjacent the junction 12 between the upright portion 11 and the lower portion 10 and thus lie in the same plane as the lower portion 10. By contrast, the third post 15 is located towards the free end 19 of the upright portion 11, i.e. the end of the upright portion projecting away from the junction 12. The first, second and third posts 13, 14, 15 define the points of an imaginary right-angled triangle, with the right angle being located at the first post 13, adjacent junction 12.

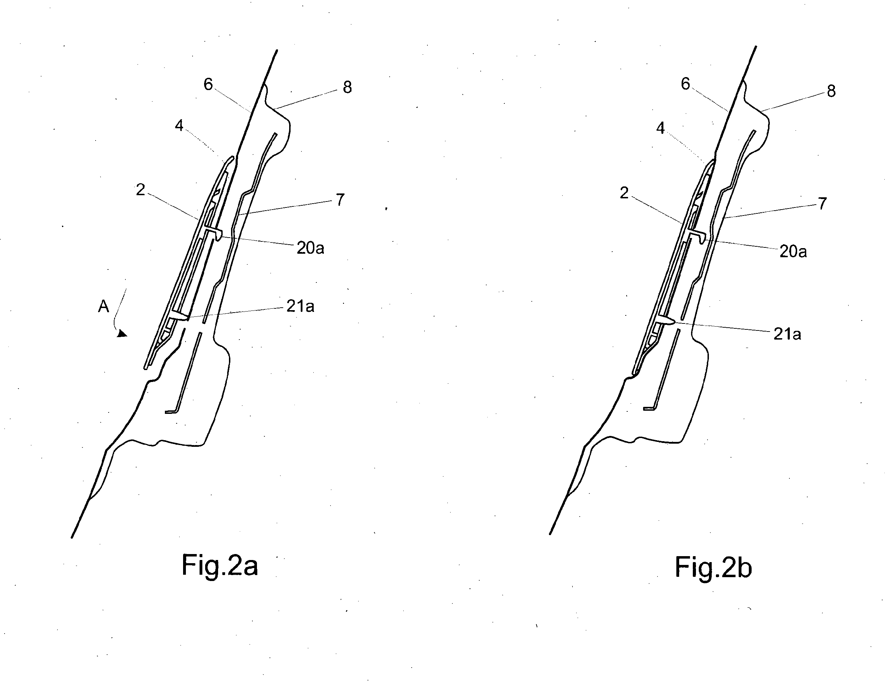

To assist with location of the mounting 1 before, while and after it is secured to the vehicle door 9, the base 3 further comprises locating features in the form of first and second projections 20, 21. The first projection 20 is hook-shaped and extends inwardly in use from the upright portion 11 of the base 3, adjacent the third post 15. The first projection 20 is about 3cm in length, having a laterally-extending lobe 20a (for which see Figures 2a and 2b) to create its hook shape.

Like the first projection 20, the second projection 21 also extends inwardly in use from the upright portion 11 of the base 3. The second projection 21 is located adjacent the second post 14 and, although also around 3cm in length, differs from the first projection 20 in that it is peg-shaped. Thus the second projection 21 is of circular cross section, tapering towards a free end 21 a (for which see Figures 2a and 2b).

The gasket 4 of the mounting 1 assists in sealing the mounting 1 to the vehicle door 9. Thus the gasket 4 is inserted, in use, between the upright portion 11 of the base 3 and the outer panel 6 of the vehicle door 9, and is formed of an elastic material to seal against those components. The gasket 4 is shaped to complement the upright portion 11 of the base 3 and to allow the insertion of fixing screws 16, 17, 18 into the threaded posts 13, 14, 15 of the mounting 1. Thus, the gasket 4 comprises three holes corresponding in location to the first, second and third threaded posts 13, 14, 15 in the upright portion 11 of the base 3 to allow the associated fixing screws 16, 17, 18 to extend through the gasket 4 for engagement with the posts 13, 14, 15.

As aforesaid, the vehicle door 9 to which the mounting 1 is shown to be secured in Figures 1 and 2 comprises the outer panel 6, the reinforcing portion 7 and the inner panel 8. Each of these components comprises one or more holes to allow the fixing screws 16, 17, 18 to be inserted from the direction of the inner panel 8, outwards in the direction of the mounting 1, as shown by the dashed line in Figure 1. In the case of the inner panel 8 and the reinforcing portion 7, three specific holes match the disposition of the posts 13, 14, 15 and receive the first, second and third fixing screws 16, 17, 18. In the case of the outer panel 6, a single large, generally triangular, hole encompasses all of the posts 13, 14, 15 and accommodates all three screws 16, 17, 18.

The gasket 4 and the outer panel 6 comprise first 22a, 22b and second 23a, 23b holes that are aligned in pairs in use respectively to receive the first and second projections 20, 21 of the base 3. Thus the first holes 22a, 22b and the second holes 23a, 23b respectively combine to form passageways for the projections 20, 21 when the gasket 4 and outer panel 6 are brought together. The first holes 22a, 22b for receiving the first projection 20 are oval, whilst the second holes 23a, 23b for receiving the second projection 21 are round.

Referring now to Figure 1 and Figures 2a and 2b, the projections 20, 21 of the base 3 of the mounting 1 are adapted to be received in the passageways/holes 22a, 22b, 23a, 23b of the gasket 4 and the outer panel 6. Specifically, the first, hook-shaped projection 20 is shaped such that it can be inserted into the first holes 22a, 22b, to support the mounting 1 in an anchored but pivotable position. Once the first projection 20 is inserted into the first holes 22a, 22b, its lobe 20a engages with an edge of the first hole 22b formed in the outer panel 6 to prevent the first projection 20 from slipping out of the first holes 22a, 22b, thereby providing an anchored, hanging support for the mounting 1. The only way in which the first projection 20 can be removed from the first holes 22a, 22b is by careful alignment of the lobe 20a with the oval shape of the first holes 22a, 22b.

The second projection 21 is optimised for an interference fit with the second holes 23a, 23b. The tapered peg shape of the second projection 21 allows for relatively easy initial insertion of the second projection 21 into the second holes 23a, 23b. Thereafter, a tight interference fit can be achieved by wedging the second portion 21 into the second holes 23a, 23b as far as possible, for example upon tightening the fixing screws 16, 17, 18 into the posts 13, 14, 15.

Having described the key structural components of the mounting 1 according to this embodiment of the invention, its working will now be illustrated with reference to Figures 1 and 2.

As stated above, the purpose of the projections 20, 21 of the base 3 of the mounting is to assist with location of the mounting 1 prior to, during, and after securing to the vehicle door 9, or indeed any other structure to which a mirror may be mounted. The projections 20, 21 enable the mounting to be located in an easy two-step process. Initially, referring to Figure 2a, the first projection 20 is inserted into the first holes 22a, 22b in the vehicle door 9. This not only provides an initial, rough location of the mounting 1 but also supports the mounting in an anchored, pivotable position. Then, once the mounting 1 is supported by the first (anchoring) projection 20, and as shown in Figure 2b, the second projection 21 is inserted into the second holes 23a, 23b, after pivoting the mounting as necessary (depicted by arrow A in Figure 2a). The second projection 21 is then held in place by an interference fit and provides a subsequent, accurate location of the mounting in combination with the first projection 20. The second projection 21 can thus be termed a secondary locating projection.

The spatial location of the projections 20, 21 on the mounting 1, and their shape, ensures that the mounting 1 is in perfect location to be permanently secured to the vehicle door 9 by the fixing screws 16, 17, 18, which are inserted into the threaded posts 13, 14, 15, and tightened, after the two above location steps have been performed. In this respect it is noted that insertion of the second projection 21 causes the first projection 20 to be pulled in the direction of the second holes 23a, 23b as far as the first holes 22a, 22b allow, taking up any tolerance between the first holes 22a, 22b and the first projection 20. This in turn causes the hook shape of the first projection 20 to prevent removal of the first projection 20 from the first holes 22a, 22b: it is no longer possible to align the lobe 20a of the first projection 20 with the oval shape of the first holes 22a, 22b to disengage the first projection. It will be appreciated that the mounting 1 according to the present embodiment is specifically adapted to accommodate this functionality. Thus, for instance, the lobe 20a of the first projection extends laterally in the direction of the second projection 21, whilst the distance of the first projection 20 to the second projection 21 is carefully selected based on the distance and shape of the first and second holes 22a, 22b, 23a, 23b.

The embodiment of the invention described above is not to be seen as limiting in any way. The skilled person will appreciate that a number of modifications to the embodiment are possible without departing from the scope of the present invention. Thus it is, for instance, possible to vary the shape of the projections to take into account the shape of the holes or other apertures for receiving them. Equally, it is possible to accommodate more than two apertures/projections or to vary the position of the apertures/projections with respect to the posts or each other.

## Claims

1. A mounting (3) for attaching a side mirror to a panel (6) of a vehicle, the mounting (3) comprising:
a plurality of threaded posts (13, 14, 15) for securing the mounting (3) to the panel (6); and
a plurality of spaced apart projections (20, 21) including a hook for insertion into a plurality of corresponding apertures in the panel (6) arranged to locate the mounting (3) before it is secured to the panel (6) by the threaded posts (13, 14, 15).

2. The mounting of claim 1, wherein:
a first one of the projections (20) is adapted to be inserted into a first associated aperture (22a) to provide a first location point for the mounting (3) and provisionally to support the mounting (3) in an anchored, but movable position; and
a second one of the projections (21) is adapted to be inserted into a second associated aperture (22b) to provide a second location point for the mounting,
the first and second location points combining to locate the mounting.

3. The mounting of claim 2, wherein the first projection (20) has a lateral protrusion (20a) adapted to engage with an edge of the first aperture (22a) to anchor the mounting (3).

4. The mounting of claim 3, wherein the lateral protrusion (20a) extends in the direction of the second projection (21) and is adapted to prevent the first projection (20) from being removed from the first aperture (22a) when the second projection (21) is inserted in the second aperture (22b).

5. The mounting of any one of claims 2 to 4, wherein the second projection (21) has a free end and is tapered towards the free end to facilitate an interference fit with the second aperture (22b).

6. A method of locating, on a vehicle, a side mirror mounting (3) comprising an anchoring projection (20) and a secondary locating projection (21), the method comprising:
inserting the anchoring projection (20) into a first aperture (22a) in the structure to support the mounting (3), in an anchored, but movable position;
moving the anchored mounting (3) as necessary; and
inserting the secondary locating projection (21) into a second aperture (22b) in the structure, the inserted anchoring and secondary locating projections combining to locate the mounting (3).

7. The method of claim 6, wherein inserting the anchoring projection (20) provides a first, approximate location of the mounting (3) on the structure and inserting the secondary location projection (21) provides a second, more accurate location of the mounting (3).

8. The method of claim 7, wherein there is a tolerance between the anchoring projection (20) and the first aperture, and the step of inserting the secondary locating projection (21) prevents movement of the anchoring projection (20) within said tolerance.

## Patentansprüche

1. Halterung (3) zum Anbringen eine Seitenspiegels an einem Blech (6) eines Fahrzeugs, wobei die Halterung (3) Folgendes umfasst:
mehrere Gewindepfosten (13, 14, 15), zum Befestigen der Halterung (3) an dem Blech (6); und
mehrere voneinander beabstandete Vorsprünge (20, 21), umfassend einen Haken, zum Einsetzen in mehrere entsprechende Aussparungen in dem Blech (6), die dazu angeordnet sind, die Halterung (3) zu fixieren, bevor sie über die Gewindepfosten (13, 14, 15) an den Blech (6) befestigt wird.

2. Halterung nach Anspruch 1, wobei:
ein erster der Vorsprünge (20) dazu angepasst ist, in eine erste zugehörige Aussparung (22a) eingesetzt zu werden, um einen ersten Fixierungspunkt für die Halterung (3) vorzusehen und die Halterung (3) provisorisch in einer verankerten aber beweglichen Stellung zu halten; und
ein zweiter der Vorsprünge (21) dazu angepasst ist, in eine zweite zugehörige Aussparung (22b) eingesetzt zu werden, um einen zweiten Fixierungspunkt für die Halterung vorzusehen,
wobei der erste und der zweite Fixierungspunkt zusammen die Halterung fixieren.

3. Halterung nach Anspruch 2, wobei der erste Vorsprung (20) eine seitliche Ausbuchtung (20a) aufweist, die dazu angepasst ist, mit einem Rand der ersten Aussparung (22a) in Eingriff zu treten, um die Halterung (3) zu verankern.

4. Halterung nach Anspruch 3, wobei sich die seitliche Ausbuchtung (20a) in der Richtung des zweiten Vorsprungs (21) erstreckt und dazu angepasst ist, zu verhindern, dass der erste Vorsprung (20) aus der ersten Aussparung (22a) entfernt wird, wenn der zweite Vorsprung (21) in die zweite Aussparung (22b) eingesetzt wird.

5. Halterung nach einem der Ansprüche 2 bis 4, wobei der zweite Vorsprung (21) ein freies Ende aufweist und zu dem freien Ende hin verjüngt ist, um eine Presspassung mit der zweiten Aussparung (22b) zu ermöglichen.

6. Verfahren zum Fixieren, an einem Fahrzeug, einer Seitenspiegelhalterung (3), umfassend einen Verankerungsvorsprung (20) und einen sekundären Fixierungsvorsprung (21), wobei das Verfahren Folgendes umfasst:
Einsetzen des Verankerungsvorsprungs (20) in eine erste Aussparung (22a) in der Struktur, um die Halterung (3) in einer verankerten aber beweglichen Stellung zu halten;
Bewegen der verankerten Halterung (3) nach Bedarf; und
Einsetzen des sekundären Fixierungsvorsprungs (21) in eine zweite Aussparung (22b) in der Struktur, wobei der eingesetzte Verankerungsvorsprung und der eingesetzte sekundäre Fixierungsvorsprung zusammen die Halterung (3) fixieren.

7. Verfahren nach Anspruch 6, wobei das Einsetzen des Verankerungsvorsprungs (20) eine erste ungefähre Fixierung der Halterung (3) an der Struktur vorsieht und das Einsetzen des sekundären Fixierungsvorsprungs (21) eine zweite genauere Fixierung der Halterung (3) vorsieht.

8. Verfahren nach Anspruch 7, wobei zwischen dem Verankerungsvorsprung (20) und der ersten Aussparung eine Toleranz vorhanden ist und der Schritt des Einsetzens des sekundären Fixierungsvorsprungs (21) die Bewegung des Verankerungsvorsprungs (20) innerhalb der Toleranz verhindert.

## Revendications

1. Monture (3) pour fixer un rétroviseur extérieur à un panneau (6) d'un véhicule, la monture (3) comprenant :
une pluralité de montants filetés (13, 14, 15) pour fixer la monture (3) au panneau (6)
; et
une pluralité de protubérances espacées (20, 21) comportant un crochet destiné à être inséré dans une pluralité d'ouvertures correspondantes dans le panneau (6) agencées pour positionner la monture (3) avant de la fixer au panneau (6) par les montants filetés (13, 14, 15).

2. Monture selon la revendication 1, dans laquelle :
une première des protubérances (20) est adaptée pour être insérée dans une première ouverture associée (22a) afin de fournir un premier point de positionnement de la monture (3) et provisoirement supporter la monture (3) dans une position ancrée, mais mobile ; et
une seconde des protubérances (21) est adaptée pour être insérée dans une seconde ouverture associée (22b) afin de fournir un second point de positionnement de la monture,
les premier et second points de positionnement se combinent pour positionner la monture.

3. Monture selon la revendication 2, dans laquelle la première protubérance (20) a une protubérance latérale (20a) adaptée pour s'engager avec un bord de la première ouverture (22a) afin d'ancrer la monture (3).

4. Monture selon la revendication 3, dans laquelle la protubérance latérale (20a) s'étend dans le sens de la seconde protubérance (21) et est adaptée pour empêcher le retrait de la première protubérance (20) hors de la première ouverture (22a) quand la seconde protubérance (21) est insérée dans la seconde ouverture (22b).

5. Monture selon l'une quelconque des revendications 2 à 4, dans laquelle la seconde protubérance (21) a une extrémité libre et est effilée vers l'extrémité libre pour faciliter un ajustement par serrage avec la seconde ouverture (22b).

6. Procédé de positionnement, sur un véhicule, d'une monture de rétroviseur extérieur (3) comprenant une protubérance d'ancrage (20) et une protubérance de positionnement secondaire (21), le procédé comprenant :
l'insertion de la protubérance d'ancrage (20) dans une première ouverture (22a) dans la structure pour supporter la monture (3), dans une position ancrée mais mobile ;
le déplacement comme il convient de la monture ancrée (3) ; et
l'insertion de la seconde protubérance de positionnement (21) dans une seconde ouverture (22b) dans la structure, les protubérances d'ancrage et de positionnement secondaire insérées se combinant pour positionner la monture (3).

7. Procédé selon la revendication 6, dans lequel l'insertion de la protubérance d'ancrage (20) fournit un premier positionnement approximatif de la monture (3) sur la structure et l'insertion de la protubérance de positionnement secondaire (21) assure un second positionnement plus précis de la monture (3).

8. Procédé selon la revendication 7, dans lequel une tolérance est prévue entre la protubérance d'ancrage (20) et la première ouverture, et l'étape d'insertion de la protubérance de positionnement secondaire (21) empêche le mouvement de la protubérance d'ancrage (20) selon ladite tolérance.
